# EUROPÄISCHE PATENTSCHRIFT

(11) **EP 1 357 368 B1**
(45) Veröffentlichungstag und Bekanntmachung des Hinweises auf die Patenterteilung: **26.11.2014**
(21) Anmeldenummer: 03004603.1
(22) Anmeldetag: 01.03.2003
(51) Int. Cl.: G01G 23/37, G01G 23/01

(54) **Wägesystem**
Weighing system
Système de pesage

(30) Priorität: 23.04.2002 DE 10218841
(43) Veröffentlichungstag der Anmeldung: 29.10.2003
(73) Patentinhaber: Bizerba GmbH & Co. KG, 72336 Balingen (DE)
(72) Erfinder: Mössmer, Harmy, 72393 Burladingen (DE)
(74) Vertreter: Hoeger, Stellrecht & Partner Patentanwälte

(56) Entgegenhaltungen:
- DE-C1- 4 441 231
- US-A- 5 306 875
- US-A- 6 041 289
- US-A1- 2001 052 041

## Beschreibung

Die Erfindung betrifft Wägesysteme mit sogenannter verteilter Architektur nach dem Oberbegriff des Patentanspruchs 1.

Bei komplexeren Wägesystemen mit vielen Waagen ist es oft notwendig, die Anzeigen der eichfähigen Messwerte auf einen zentralen Bildschirm des aus mehreren Datenverarbeitungsvorrichtungen bestehenden Gesamtsystems zu vereinen. Außerdem soll die Initialisierung, die Konfiguration und die Steuerung aller Waagen von einem Punkt aus erfolgen.

In der EP 0 782 699 B1 und der DE 44 41 231 C1 ist beschrieben, wie man Messwerte der Waagen eichfähig abspeichert. Auf diese Verfahren wird im Zusammenhang mit der vorliegenden Erfindung explizit verwiesen.

Die US 5,306,875 A offenbart eine Wägevorrichtung mit einer zentralen Verwaltung, welche beispielsweise als Personalcomputer ausgebildet ist.

Der Erfindung liegt die Aufgabe zu Grunde, auf einfache Weise eine offene und flexible Betriebsweise eines Wägesystems zu erzielen. Vor allem soll die eichfähige Anzeige aller Waagen der verteilten Wägetechnik an einem zentralen Punkt möglich sein, wobei dieser zentrale Punkt weit entfernt von den verteilt aufgestellten Waagen sein kann.

Die Aufgabe wird erfindungsgemäß durch die im Hauptanspruch genannten Merkmale gelöst. Weitere vorteilhafte Ausgestaltungen ergeben sich aus den Unteransprüchen.

Der eine Personalcomputer mit der Waagenfunktions-Steuereinheit hat die Funktion einer zentralen Anzeigeneinheit, der die Gewichtswerte nicht nur der an ihm angeschlossenen Messbusteilnehmer, sondern auch die der an den weiteren Personalcomputern angeschlossenen Messbusteilnehmern übermittelt werden.

Die dabei empfangenen Gewichtswerte sind vorzugsweise eichfähige Gewichtswerte.

Erfindungsgemäß werden die Personalcomputer, welche über ein Messbusinterface mit einem oder mehreren Messbusteilnehmern verbunden sind, über jeweils ein Software-Waagen-Interface verfügen.

Ein solches Software-Waagen-Interface stellt wägetechnische Funktionen zur Verfügung, wie z.B. Nullstellen, Tarieren, Tara löschen und Registrieren von Gewichtswerten als gültige Wägeergebnisse in einem insbesondere eichfähigen Datenspeicher in Kommunikation mit den Waagen.

Das Software-Waagen-Interface empfängt von den Messbusteilnehmern stammende Gewichtswerte und leitet diese an die Waagenfunktions-Steuereinheit des einen Personalcomputers weiter.

Der eichfähige Datenspeicher ist bevorzugt als virtuelles Dual Ported RAM ausgeführt.

Mehrere Waagen können über einen Messbus zusammengeschaltet werden, welcher über ein Hardware-Interface und eine Normierungs- und Filterungsfunktion die Messwerte der an einem Messbusinterface angeschlossenen Waagen in einen zentralen eichfähigen Speicherbereich ablegt.

Diese Architektur ist nun in jedem Personalcomputer, an den über einen Messbus Waagen angeschlossen sind, vorhanden. Mehrere solcher Personalcomputer mit oder ohne Waagen können nun über eine Netzwerkverbindung miteinander verbunden werden.

Einer der Personalcomputer kann nun die eichfähige Gewichtsanzeige aller im Netzwerk vorhandenen Waagen jeweils in einem Fenster eines Bildschirmes darstellen. Dieser Personalcomputer enthält dazu vorzugsweise ein Programm, welches als DCOM-Server funktioniert. DCOM (Distributed Component Object Model) ist ein Mechanismus, welcher es ermöglicht, über mehrere Computer in einem Netzwerk verteilte Anwendungen auszuführen. Diese Technik ist beispielsweise aus der DE 198 50 469 A1 bekannt.

Die anderen Personalcomputer enthalten jeweils einen DCOM-Client. Sind an dem Personalcomputer mit dem DCOM-Server gleichzeitig auch Waagen angeschlossen, so ist auch auf diesem Computer die Installation eines DCOM-Clients notwendig.

Die mit der Erfindung erzielten Vorteile bestehen insbesondere darin, dass die Steuerung und Konfiguration aller im Wägesystem vorhandenen Waagen zentral von einem Punkt von der Waagenfunktions-Steuereinheit aus erfolgen kann.

Auch die Diagnose im Fehlerfall einer Waage erfolgt von dem zentralen Punkt aus.

Jede Waage wird auf dem Hauptserver in einem separaten Fensterbereich angezeigt. Somit erhält man immer einen Überblick über alle Waagen.

Die gesamte Waagensoftware ist modular aufgebaut, so dass anwendungsbezogene Applikationen darauf aufgesetzt werden können.

Erfindungsgemäß umfasst jeder der Personalcomputer mit einem Messbusinterface ein Hardware-Waageninterface, welches die Messsignale der am Messbusinterface angeschlossenen Messbusteilnehmer empfängt und an das Software-Waageninterface weiterleitet.

Im Zuge des Weiterleitens kann eine Normierungseinheit die Messsignale der Messbusteilnehmer aufbereiten, eine Filtereinheit wird diese vorzugsweise filtern, um Störsignale auszuschließen bevor die so erhaltenen Messdaten als Gewichtswerte, vorzugsweise eichfähige Gewichtswerte, in einem Gewichtswertespeicher (bevorzugt eichfähig ausgebildet) zwischengespeichert werden.

Diese und weitere Vorteile der Erfindung werden im Folgenden an Hand der Beschreibung und der Zeichnung noch näher erläutert. Dabei zeigen.
- Fig. 1:: einen modularen Aufbau eines Personalcomputers mit Wägetechnik;
- Fig. 2:: einen modularen Aufbau des Hauptservers als Waagen-Funktions-Manager;
- Fig. 3:: ein Wägesystem bestehend aus mehreren Personalcomputern mit und ohne Waagen; und
- Fig. 4:: eine eichfähige Gewichtsanzeige auf dem Hauptserver.

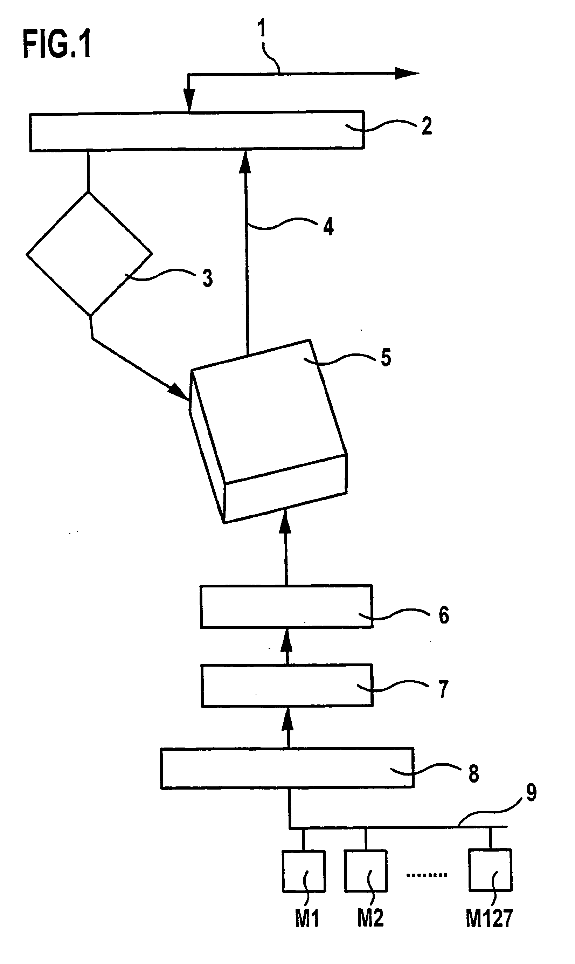

Figur 1 zeigt den modularen Aufbau eines Personalcomputers mit Wägetechnik. Über ein Hardware-Waagen-Interface 8 sind an einem Messbus 9 bis zu 127 Messbusteilnehmer M1, ... M127 angeschlossen. Die Messbusteilnehmer können entweder digitale Wägezellen, ein Messbus-fähiger ADW (Analog-Digital-Wandler) mit angeschlossenen analogen Wägezellen, eine Präzisionswaage oder eine externe Waage sein. Der Messbus 9 lässt sich physikalisch, beispielsweise mit einer seriellen Schnittstelle des Personalcomputers realisieren. Es sind also bei mehreren seriellen Schnittstellen jeweils auch mehrere getrennte Messbusse 9 möglich. Das Hardware-Waagen-Interface 8 enthält über den Messbus 9 die Messwerte als Zählerstände von allen Messbusteilnehmern M1, ... M127.

Diese Zählerstände werden an die Normierungseinheit 7 weitergeleitet. Die Normierungseinheit 7 rechnet den Zählerstand entsprechend dem jeweiligen Wägebereich der zugehörigen Waage auf einen Gewichtswert um. Von der Normierungseinheit 7 werden die Gewichtswerte weiter an eine Filtereinheit 6 übergeben. Hier werden Störsignale sowie das Einschwingverhalten gefiltert und der Gewichtswert zu einem Mittelwert berechnet. Anschließend werden die gültigen (gemittelten) Gewichtswerte registriert, d.h. in einen Speicher 5 für die eichfähige Speicherung gegeben. Der Speicher 5 enthält zu jedem Messbusteilnehmer M1, ... M127 in chronologischer Reihenfolge die Werte: Brutto, Tara, Netto und Status.

Ein Software-Waagen-Interface 2 ruft wägetechnische Funktionen 3 wie Nullstellen, Tarieren, Tara löschen und Registrieren in dem Speicher 5 auf und erhält über den Datenkanal 4 die für die Anzeige vorgesehenen Gewichtswerte. Das Software-Waagen-Interface 2 enthält einen DCOM-Client, welcher die Messwerte als Objekte über die DCOM-Schnittstelle 1 an den DCOM-Server weitergibt. Dieser modulare Aufbau ist jeweils einmal pro Personalcomputer notwendig, wenn an diesem Waagen angeschlossen werden.

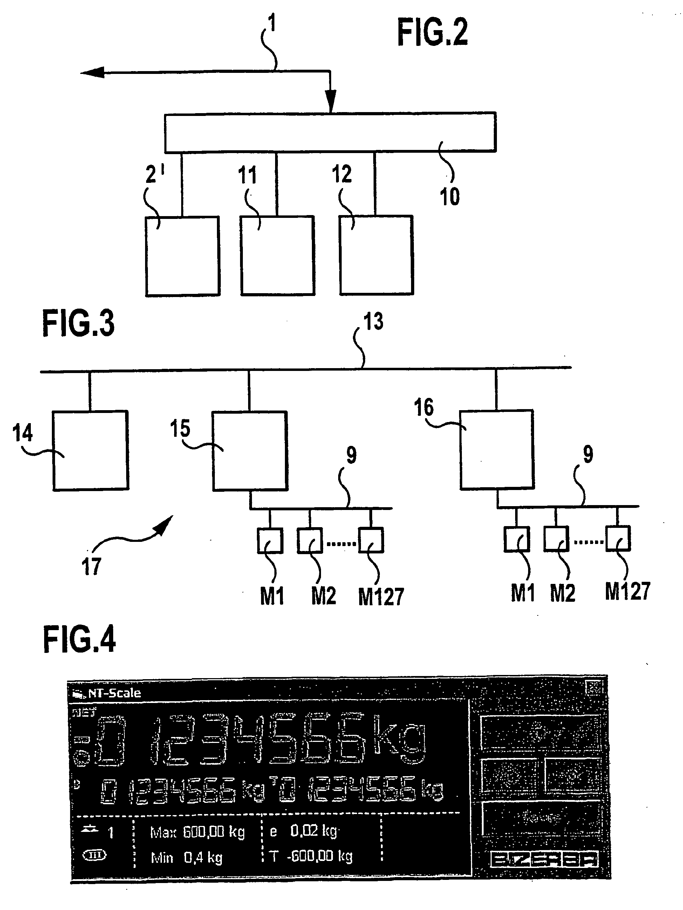

Figur 2 zeigt eine Waagenfunktions-Steuereinheit 10, welche den DCOM-Server enthält und welche von anderen Personalcomputern über die DCOM-Schnittstelle 1 die Gewichtswerte abruft bzw. empfängt, Steuerparameter und Funktionen sendet. Der Waagenfunktions-Steuereinheit 10 untergeordnet sind die Module, wie z.B. Anzeigen-Administration 11, Service-Funktionen 12 und gegebenenfalls auch ein Software-Waagen-Interface 2'. Der Modul Anzeigen-Administration 11 ist für die eichfähige Anzeige der Gewichtswerte pro Waage in einem Fenster zuständig. Ein eichfähiges Anzeigefenster ist in Figur 4 dargestellt. Der Modul Service-Funktionen 12 ist für die Konfigurierung der Waagen zuständig. Der Modul Software-Waagen-Interface 2' ist hier nur notwendig, wenn an dem Personalcomputer, auf dem die Waagenfunktions-Steuereinheit 10 installiert ist, auch gleichzeitig über ein Messbusinterface Waagen angeschlossen sind.

Figur 3 zeigt ein Wägesystem 17, bestehend aus mehreren Personalcomputern 14, 15, 16. Diese sind über ein Netzwerk 13 miteinander verbunden. Das Netzwerk 13 ist üblicherweise ein Ethernet mit TCP/IP-Protokoll. An den Personalcomputern 15 und 16 sind jeweils Waagen als Messbusteilnehmer M1, ... M127 angeschlossen. In diesen beiden Computern ist also ein modularer Aufbau entsprechend Figur 1 enthalten. Der modulare Aufbau entsprechend Figur 2 ist nur in einem der Personalcomputer 14, 15, 16 enthalten.

Figur 4 zeigt das Fenster der eichfähigen Anzeige eines Messbusteilnehmers M1, ... M127, wie es auf dem Bildschirm des Personalcomputers mit der Waagenfunktions-Steuereinheit 10 angezeigt wird.

## Patentansprüche

1. Wägesystem (17) mit mindestens zwei Personalcomputern (14, 15, 16), welche über eine Netzwerkverbindung miteinander verbunden sind, wobei mindestens einer der Personalcomputer (14, 15, 16) ein Messbusinterface mit mindestens einem daran angeschlossenen Messbusteilnehmer (M1, ... M127) aufweist, welcher ausgebildet und eingerichtet ist, Gewichtswerten entsprechende Messsignale zu erzeugen, und wobei einer der Personalcomputer (14, 15, 16) eine Waagenfunktions-Steuereinheit (10) umfasst, welche ausgebildet und eingerichtet ist, die Gewichtswerte aller Messbusteilnehmer (M1, ... M127) im Wägesystem (17) zu empfangen und einer Anzeigefunktion zuzuordneen, welche ausgebildet und eingerichtet ist, einen Speicherbereich eines Bildschirmspeichers dieses einen Personalcomputers (14, 15, 16) zu verwalteen, so dass der Gewichtswert eines jeden Messbusteilnehmers (M1, ... M127) auf dem Bildschirm des einen Personalcomputers (14, 15, 16) nach Wahl zur Anzeige bringbar ist,
**dadurch gekennzeichnet,**
**dass** jeder der Personalcomputer (14, 15, 16), welcher über ein Messbusinterface mit einem oder mehreren Messbusteilnehmern (M1, ... M127) verbunden ist, ein Software-Waagen-Interface (2) enthält, welches ausgebildet und eingerichtet ist, Steuersignale zur wägetechnischen Steuerung eines Messdaten-Speichers (5) zu erzeugen, dass jeder der Personalcomputer (14, 15, 16) mit einem Messbusinterface ein Hardware-Waagen-Interface (8) umfasst, welches ausgebildet und eingerichtet ist, die Messsignale der Messbusteilnehmer (M1, ... M127) zu empfangen und an das Software-Waagen-Interface (2) weiterzuleiten, und
**dass** die Messsignale der Messbusteilnehmer (M1, ... M127) vor deren Weiterleitung an das Software-Waagen-Interface (2) in einem Messdatenspeicher (5) des Wägesystems (17) zwischengespeichert werden.

2. Wägesystem (17) nach Anspruch 1, **dadurch gekennzeichnet, dass** die von dem einen Personalcomputer (14, 15, 16) empfangenen Gewichtswerte eichfähige Gewichtswerte sind.

3. Wägesystem (17) nach einem der Ansprüche 1 oder 2, **dadurch gekennzeichnet, dass** die Steuersignale Signale zum Nullstellen einer Messdaten-Speicherstelle, zum Tarieren, zum Löschen eines Tarawertes sowie zum Registrieren von Gewichtswerten sind.

4. Wägesystem (17) nach einem der Ansprüche 1 bis 3, **dadurch gekennzeichnet, dass** das Software-Waagen-Interface (2) ausgebildet und eingerichtet ist, Gewichtswerte zu empfangen und an die Waagenfunktions-Steuereinheit (10) weitezuleiteen.

5. Wägesystem (17) nach einem der Ansprüche 1 bis 4, **dadurch gekennzeichnet, dass** die Kommunikation zwischen der Waagenfunktions-Steuereinheit (10) und dem oder den Software-Waagen-Interface(s) (2) mittels DCOM-Objekten über eine DCOM-Schnittstelle (1) erfolgt.

6. Wägesystem (17) nach einem der voranstehenden Ansprüche, **dadurch gekennzeichnet, dass** die Waagenfunktions-Steuereinheit (10) ausgebildet und eingerichtet ist, die Steuerung und gegebenenfalls Konfigurierung eines jeden Messbusteilnehmers (M1, ... M127) durchzuführen.

7. Wägesystem (17) nach einem der voranstehenden Ansprüche, durch gekennzeichnet, dass die Waagenfunktions-Steuereinheit (10) ausgebildet und eingerichtet ist, eine Diagnose einer oder mehrerer Messbusteilnehmer (M1, ... M127) durchzuführen.

8. Wägesystem (17) nach einem der Ansprüche 1 bis 7, **dadurch gekennzeichnet, dass** die Messsignale der Messbusteilnehmer (M1, ... M127) vor dem Weiterleiten an das Software-Waagen-Interface (2) in einer Normierungseinheit (7) aufbereitet werden.

9. Wägesystem (17) nach einem der Ansprüche 1 bis 8, **dadurch gekennzeichnet, dass** die Messsignale der Messbusteilnehmer (M1, ... M127) vor dem Weiterleiten an das Software-Waagen-Interface (2) in einer Filtereinheit (6) gefiltert werden.

10. Wägesystem (17) nach einem der Ansprüche 1 bis 9, **dadurch gekennzeichnet, dass** der Messdatenspeicher (5) ein eichfähiger Gewichtswertespeicher ist, welcher Gewichtswerte über die Normierungseinheit (7) und Filtereinheit (6) empfängt.

11. Wägesystem (17) nach einem der voranstehenden Ansprüchen, **dadurch gekennzeichnet, dass** die Personalcomputer (14, 15, 16) mit einem Messstellenbus und daran angeschlossenen Messbusteilnehmer (M1, ... M127) aus den von den Messbusteilnehmern (M1, ... M127) erhaltenen Messdaten eichfähige Gewichtswerte ermitteln und diese in einem eichfähigen Gewichtswertespeicher zwischenspeichern, bevor diese an die Waagenfunktions-Steuereinheit (10) des einen Personalcomputers (14, 15, 16), gegebenenfalls über die Netzwerkverbindung in eichfähiger Form übermittelt werden.

## Claims

1. Weighing system (17) having at least two personal computers (14, 15, 16) which are connected to one another by means of a network connection, at least one of the personal computers (14, 15, 16) comprising a measuring bus interface with, connected to said interface, at least one measuring bus member (M1, ... M127), which is configured and equipped to generate measurement signals corresponding to weight values and wherein one of the personal computers (14, 15, 16) includes a balance function control unit (10) which is configured and equipped to receive the weight values of all the measuring bus members (M1, ... M127) in the weighing system (17) and to assign said weight values to a display function, which is configured and equipped to administer a memory region of a display memory of this one personal computer (14, 15, 16) so that the weight value of each measuring bus member (M1, ... M127) is displayable on the screen of the one personal computer (14, 15, 16) as selected, **characterised in that** each of the personal computers (14, 15, 16) which is connected by means of a measuring bus interface to one or more measuring bus members (M1, ... M27) contains a software-balance interface (2) which is configured and equipped to generate control signals for weighing-related control of a measurement data memory (5), **in that** each of the personal computers (14, 15, 16) with a measuring bus interface includes a hardware-balance interface (8) which is configured and equipped to receive the measurement signals of the measuring bus members (M1, ... M127) and to pass on said measurement signals to the software-balance interface (2), and **in that** the measurement signals of the measuring bus members (M1, ... M127) are buffered in a measurement data memory (5) of the weighing system (17) before being transferred to the software-balance interface (2).

2. Weighing system (17) according to claim 1, **characterised in that** the weight values received by the one personal computer (14, 15, 16) are calibratable weight values.

3. Weighing system (17) according to one of the claims 1 or 2, **characterised in that** the control signals are signals for zeroing a measurement data memory location, for taring, for deleting a tare value and for registering weight values.

4. Weighing system (17) according to one of the claims 1 to 3, **characterised in that** the software-balance interface (2) is configured and equipped to receive weight values and to pass them on to the balance function control unit (10).

5. Weighing system (17) according to one of the claims 1 to 4, **characterised in that** the communication between the balance function control unit (10) and the software-balance interface(s) (2) is carried out by means of DCOM objects through a DCOM interface (1).

6. Weighing system (17) according to one of the preceding claims, **characterised in that** the balance function control unit (10) is configured and equipped to carry out the control and optionally the configuration of each measuring bus member (M1, ... M127).

7. Weighing system (17) according to one of the preceding claims, **characterised in that** the balance function control unit (10) is configured and equipped to carry out a diagnosis of one more measuring bus members (M1, ... M127).

8. Weighing system (17) according to one of the claims 1 to 7, **characterised in that** the measurement signals of the measuring bus members (M1, ... M127) are processed in a normalising unit (7) before being transferred to the software-balance interface (2).

9. Weighing system (17) according to one of the claims 1 to 8, **characterised in that** the measurement signals of the measuring bus members (M1, ... M127) are filtered in a filter unit (6) before being transferred to the software-balance interface (2).

10. Weighing system (17) according to one of the claims 1 to 9, **characterised in that** the measurement data memory (5) is a calibratable weight value memory which receives weight values via the normalising unit (7) and the filter unit (6).

11. Weighing system (17) according to one of the preceding claims, **characterised in that**, with a measuring site bus and measuring bus members (M1, ... M127) connected thereto, the personal computers (14, 15, 16) determine calibratable weight values from the measurement data received from the measuring bus members (M1, ... M127) and buffer said weight values in a calibratable weight value memory before they are transferred in a calibratable form to the balance function control unit (10) of the one personal computer (14, 15, 16), optionally by means of the network connection.

## Revendications

1. Système de pesage (17) comprenant au moins deux ordinateurs personnels (14, 15, 16), qui sont reliés les uns aux autres par une connexion en réseau, dans lequel au moins un des ordinateurs personnels (14, 15, 16) présente une interface de bus de mesure avec au moins un usager du bus de mesure (M1, ..., M127) raccordé à celle-ci, qui est configuré et conçu pour produire des signaux de mesure correspondant à des valeurs de poids et dans lequel un des ordinateurs personnels (14, 15, 16) comprend une unité de commande de fonction de balance (10), qui est configurée et conçue pour recevoir les valeurs de poids de tous les usagers du bus de mesure (M1, ..., M127) dans le système de pesage (17) et les associer à une fonction d'affichage, qui est configurée et conçue pour gérer une zone de mémoire d'une mémoire graphique dudit un ordinateur personnel (14, 15, 16), de telle manière que la valeur de poids de n'importe quel usager du bus de mesure (M1, ..., M127) puisse être au choix mise à l'affichage sur l'écran dudit un ordinateur personnel (14, 15, 16), **caractérisé en ce que** chacun des ordinateurs personnels (14, 15, 16), qui est relié par une interface de bus de mesure à un ou plusieurs usagers du bus de mesure (M1, ..., M127), contient une interface logiciel-balance (2), qui est configurée et conçue pour produire des signaux de commande pour la commande par pesée d'une mémoire de données de mesure (5), **en ce que** chacun des ordinateurs personnels (14, 15, 16) avec une interface de bus de mesure comprend une interface matériel-balance (8), qui est configurée et conçue pour recevoir les signaux de mesure des usagers du bus de mesure (M1, ..., M127) et les retransmettre à l'interface logiciel-balance (2), et **en ce que** les signaux de mesure des usagers du bus de mesure (M1, ..., M127) sont stockés temporairement dans une mémoire de données de mesure (5) du système de pesage (17) avant leur retransmission à l'interface logiciel-balance (2).

2. Système de pesage (17) selon la revendication 1, **caractérisé en ce que** les valeurs de poids reçues par ledit un ordinateur personnel (14, 15, 16) sont des valeurs de poids certifiables.

3. Système de pesage (17) selon une des revendications 1 ou 2, **caractérisé en ce que** les signaux de commande sont des signaux destinés à la remise à zéro d'un point de mémoire de données de mesure, au tarage, à l'effacement d'une valeur de tare ainsi qu'à l'enregistrement de valeurs de poids.

4. Système de pesage (17) selon l'une quelconque des revendications 1 à 3, **caractérisé en ce que** l'interface logiciel-balance (2) est configurée et conçue pour recevoir des valeurs de poids et les retransmettre à l'unité de commande de la fonction de balance (10).

5. Système de pesage (17) selon l'une quelconque des revendications 1 à 4, **caractérisé en ce que** la communication entre l'unité de commande de fonction de balance (10) et la ou les interface(s) logiciel-balance (2) est assurée au moyen d'objets DCOM via une interface DCOM (1).

6. Système de pesage (17) selon l'une quelconque des revendications précédentes, **caractérisé en ce que** l'unité de commande de fonction de balance (10) est configurée et conçue pour exécuter la commande et éventuellement la configuration de n'importe lequel des usagers du bus de mesure (M1, ..., M127).

7. Système de pesage (17) selon l'une quelconque des revendications précédentes, **caractérisé en ce que** l'unité de commande de fonction de balance (10) est configurée et conçue pour effectuer un diagnostic d'un ou de plusieurs des usagers du bus de mesure (M1, ..., M127).

8. Système de pesage (17) selon l'une quelconque des revendications 1 à 7, **caractérisé en ce que** les signaux de mesure des usagers du bus de mesure (M1, ..., M127) sont préparés dans une unité de normalisation (7) avant d'être retransmis à l'interface logiciel-balance (2).

9. Système de pesage (17) selon l'une quelconque des revendications 1 à 8, **caractérisé en ce que** les signaux de mesure des usagers du bus de mesure (M1, ..., M127) sont filtrés dans une unité de filtrage (6) avant d'être retransmis à l'interface logiciel-balance (2).

10. Système de pesage (17) selon l'une quelconque des revendications 1 à 9, **caractérisé en ce que** la mémoire de données de mesure (5) est une mémoire de valeurs de poids certifiable, qui reçoit des valeurs de poids par l'intermédiaire de l'unité de normalisation (7) et de l'unité de filtrage (6).

11. Système de pesage (17) selon l'une quelconque des revendications précédentes, **caractérisé en ce que** les ordinateurs personnels (14, 15, 16) avec un bus de points de mesure et des usagers du bus de mesure (M1, ..., M127) raccordés à ceux-ci déterminent des valeurs de poids certifiables à partir des données de mesures obtenues par les usagers du bus de mesure (M1, ..., M127) et les stockent temporairement dans une mémoire de valeurs de poids certifiable, avant de les transmettre à l'unité de commande de fonction de pesage (10) dudit un ordinateur personnel (14, 15, 16), éventuellement via la connexion en réseau sous forme certifiable.
